# EUROPEAN PATENT APPLICATION

(11) **EP 2 234 353 A1**
(43) Date of publication of application: **29.09.2010**
(21) Application number: 09701958.2
(22) Date of filing: 15.01.2009
(51) Int. Cl.: H04L 12/66, H04L 12/56, H04M 3/00

(54) **GATEWAY DEVICE, SYSTEM, AND COMMUNICATION METHOD**

(30) Priority: 16.01.2008 JP 2008006888
(71) Applicant: NEC Corporation, Minato-ku Tokyo 108-8001 (JP)
(72) Inventor: OZAWA, Kazunori, Tokyo 108-0014 (JP)
(74) Representative: Glawe, Delfs, Moll
(86) International application number: PCT/JP2009/050432
(87) International publication number: WO 2009/090984

(57) **Abstract**

A gateway device includes a communication unit communicating a frame signal conforming to an IuUP (Iu User Plane) protocol with a wireless base station controller connected to a circuit switching network; a determination unit determining whether the frame signal received by the communication unit satisfies a predetermined condition or not; a conversion unit converting information included in the frame signal to information to be set in a call control signal of an IMS (IP Multimedia Subsystem) when the frame signal satisfies the predetermined condition; and a call control signal transmission unit transmitting the call control signal to a communication device in the IMS.

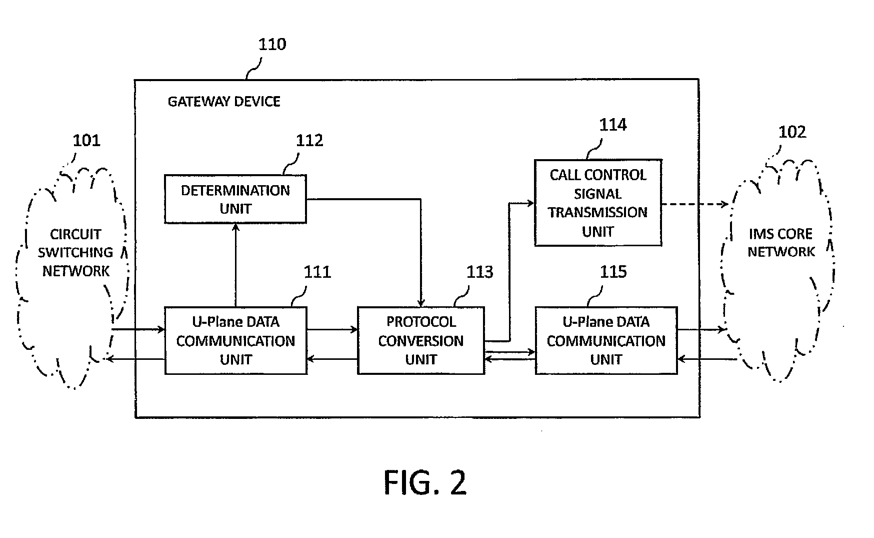

## Description

### {Technical Field}

The present invention relates to a gateway device for realizing multimedia services such as voice service and TV telephone by connecting a radio network controller (RNC) and a fixed network or an IMS (IP Multimedia Subsystem) core network in a cellular phone network.

### {Background Art}

In a cellular phone terminal and a cellular phone network using the third-generation W-CDMA technique, a circuit switching network or a circuit switching protocol is used in order to realize a voice telephone and a TV telephone.

In the meantime, there is a trend toward providing multimedia service on such a circuit switching network by using an IMS on an IP network. In the future, various services are going to be integrated on an IMS core network. The configuration of an IMS is described in, for example, non-patent document 1, which is described below and TS23.228 specified by 3GPP (3rd Generation Partnership Project).

### {Citation List}

### {Patent Literature}

{NPL 1} 3rd Generation Partnership Project, "3GPP TS 23.002 v7.1.0" pp. 36 to 38, Figure 6, issued in March 2006, http://www.3gpp.orgfftp/Specs/html-info/23002.htm, searched on the Internet on December 27, 2007
{NPL 2} 3rd Generation Partnership Project, "3GPP TS 29.163 v8.0.0" pp. 88 to 89, Figure 32, issued in September 2007, http://www.3gpp.org/flp/Specs/html-info/29163.htm, searched on the Internet on December 27, 2007
{NPL 3} 3rd Generation Partnership Project, "3GPP TS 26.090 v5.0.0" pp. 13 to 15, Table 1, issued in June 2002, http://www.3gpp.org/ft/Specs/html-info/26090.htm, searched on the Internet on December 27, 2007
{NPL 4} 3rd Generation Partnership Project, "3GPP TS 25.415 v7.3.0" pp. 11 to 13, Figure 3, issued in December 2006, http://www3gpp.org/ftp/Specs/html-info/25415.htm, searched on the Internet on December 27, 2007

### {Summary of Invention}

### {Technical Problem}

When providing multimedia service on a circuit switching network by using an IMS, an IMS core network has to be connected to the circuit switching network. In this case, a communication protocol of call control used on the IMS is different from that on the circuit switching network. Therefore, even when a frame signal of a multimedia service is supplied from the circuit switching network to the IMS, the IMS cannot properly perform the call control.

The present invention has been achieved in view of the drawbacks and an object of the invention is to provide a gateway device for performing call control of a frame signal supplied from a circuit switching network to an IMS core network.

### {Solution to Problem}

A gateway device of the present invention includes: a communication unit communicating a frame signal conforming to an IuUP (Iu User Plane) protocol with a wireless base station controller connected to a circuit switching network; a determination unit determining whether the frame signal received by the communication unit satisfies a predetermined condition or not; a conversion unit converting information included in the frame signal to information to be set in a call control signal of an IMS (IP Multimedia Subsystem) when the frame signal satisfies the predetermined condition; and a call control signal transmission unit transmitting the call control signal including the converted information to a communication device in the IMS.

A system of the present invention includes a gateway device and a call controller which are communicatably connected to each other. The gateway device includes: a first communication unit communicating a frame signal conforming to an IuUP (Iu User Plane) protocol with a wireless base station controller connected to a circuit switching network; a determination unit determining whether the frame signal received by the first communication unit satisfies a predetermined condition or not; a conversion unit converting information included in the frame signal to information to be set in a call control signal of an IMS (IP Multimedia Subsystem) when the frame signal satisfies the predetermined condition; and a second communication unit transmitting the information converted by the conversion unit to the call controller, and the call controller comprises a call control signal transmission unit transmitting the call control signal including the information received from the gateway device to a communication device in the IMS.

A communication method of the present invention includes the steps of: receiving a frame signal conforming to an IuUP (Iu User Plane) protocol from a wireless base station controller connected to a circuit switching network; determining whether the frame signal satisfies a predetermined condition or not; converting information included in the frame signal to information to be set in a call control signal of an IMS (IP Multimedia Subsystem) when the frame signal satisfies the predetermined condition; and transmitting the call control signal including the converted information to a communication device in the IMS.

### {Advantageous Effects of Invention}

According to the present invention, a call control adapted to the IMS can be performed on a frame signal supplied from a circuit switching network to the IMS. Thus, multimedia service in the circuit switching network can be provided in a proper state to the IMS.

### {Brief Description of Drawings}

{FIG 1} FIG. 1 is a configuration diagram of a system in a first embodiment of the present invention.
{FIG. 2} FIG 2 is a block diagram of a gateway device in the first embodiment of the invention.
{FIG. 3} FIG. 3 is a flowchart showing an operation procedure of the first embodiment of the invention.
{FIG. 4} FIG 4 is a configuration diagram of a system in a second embodiment of the invention.
{FIG. 5} FIG. 5 is a block diagram of a U-Plane gateway device and a call controller in the second embodiment of the invention.

### {Reference Signs List}

- 10,20:: System
- 100:: Wireless base station controller
- 101:: Circuit switching network
- 102:: IMS core network
- 110:: Gateway device
- 120:: IMS device
- 200:: U-Plane gateway device
- 210:: Call controller
- 111, 115, 202, 204:: U-Plane data communication unit
- 112,201:: Determination unit
- 113,203:: Protocol conversion unit
- 114,211:: Call control signal transmission unit
- 205, 212:: MEGACO communication unit

### {Description of Embodiments}

### <First Embodiment>

FIG 1 shows a system configuration of a first embodiment of the present invention. In a system 10 of the embodiment, a wireless base station controller 100 and a gateway device 110 are connected to each other via a circuit switching network 101. An IMS device 120 is connected to the gateway device 110 via an IMS core network 102 formed in an IP network.

An IMS-MGW (IMS media gateway) device may be used as the IMS device 120. The configuration of the IMS-MGW device is described in, for example, the non-patent document 2 using 3GPP, TS23.228 and TS29.163, and the like. The configuration of the IMS core network 102 is described in the non-patent document 1, TS23.228, and the like.

In the system 10 of the embodiment, AMR (Adaptive Multi-Rate) is used as a voice codec for voice call service. The AMR is described in the non-patent document 3 using 3GPP, TS26.071, and the like. In addition to the AMR, other voice codecs such as AMR-WB or AMR-WB+ can also be used. AMR-WB and AMR-WB+ are described in 3GPP TS26.190 and TS26.290, respectively.

The gateway device 110 receives a frame signal conforming to the protocol used in the circuit switching network 101 as user plane data from the wireless base station controller 100. As the protocol, for example, the IuUP (Iu User Plane) protocol can be used. The IuUP protocol is described in the non-patent document 4 using 3GPP, and the like.

FIG. 2 shows the functional configuration of the gateway device 110. A U-plane (User Plane) data communication unit 111 communicates a frame signal confirmed based on the IuUP protocol with the wireless base station controller 100 (FIG 1) via the circuit switching network 101. A U-plane data communication unit 115 communicates a frame signal based on the IuUP protocol with the IMS device 120 (FIG. 1) via the IMS core network 102.

A call control signal transmission unit 114 generates a call control signal corresponding to the frame signal received from the wireless base station controller 100, and transmits the call control signal to the IMS device 120. A determination unit 112 determines whether the frame signal received from the wireless base station controller 100 satisfies a predetermined condition or not. When the received frame satisfies the predetermined condition, a protocol conversion unit 113 converts information included in the frame to information to be set in a call control signal generated by the call control signal transmission unit 114.

With reference to the flowchart of FIG. 3, the operation of the gateway device 110 with the above-described configuration will be described. The U-Plane data communication unit 111 receives a frame signal of the IuUP protocol transmitted from the wireless base station controller 100 via the circuit switching network 101 (step S1).

The determination unit 112 extracts PDU type information and procedure indicator information from the received frame. The determination unit 112 then determines whether the PDU type information is "14" out of "0", "1", and "14" or not, and also determines whether the procedure indicator information is "0" or not (step S2).

If the PDU type is "14" and the procedure indicator information is "0" as a result of the determination (YES in step S3), the protocol conversion unit 113 recognizes that the received frame indicates an IuUP protocol initialization request (step S4). The initialization request is a procedure for securing a necessary band in a signal path from the IMS core network 102 to the wireless base station controller 100.

In the case where the received frame is the initialization request, the protocol conversion unit 113 generates mode-set information conforming to AMR by using at least one of the following information pieces (1) to (3) included in the frame (step S5):

(1) the number (N) of RAB sub-flows in each of RFCI (Radio Access Bearer (RAB) sub-flow combination indicators) in signal paths used by the wireless base station controller 100,
(2) the length of each of the N RAB sub-flows in the first RFCI, and
(3) the length of each of the N RAB sub-flows in the second RFCI.

The mode-set information generated by using the above-described information is information to be set in the call control signal generated by the call control transmission unit 114. The mode-set information refers to a request on the AMR bit rate received from a device on the other side. That is, the mode-set information is information for instructing the IMS device 120 on the AMR bit rate to be applied to data transmission from the IMS device 120 to the wireless base station controller 100.

An example of the process in the protocol conversion unit 113 will now be described. The protocol conversion unit 113 generates the mode-set information based on a predetermined conversion table like the following TABLE 1.

**[TABLE 1]**

| AMR | RAB sub-flows | | | Total size of bits / RAB sub-flows combination | Source rate | mode-set |
|---|---|---|---|---|---|---|
| RFCI Example 1 | RAB sub-flow 1 | RAB sub-flow 2 | RAB sub-flow 3 | | | |
| 2 | 42 | 53 | 0 | 95 | AMR 4,75 kbps | 0 |
| 3 | 49 | 54 | 0 | 103 | AMR 5,15 kbps | 1 |
| 4 | 55 | 63 | 0 | 118 | AMR 5,9 kbps | 2 |
| 5 | 58 | 76 | 0 | 134 | AMR 6,7 kbps | 3 |
| 6 | 61 | 87 | 0 | 148 | AMR 7,4 kbps | 4 |
| 7 | 75 | 84 | 0 | 159 | AMR 7,95 kbps | 5 |
| 8 | 65 | 99 | 40 | 204 | AMR 10,2 kbps | 6 |
| 9 | 81 | 103 | 60 | 244 | AMR 12,2 kbps | 7 |
| 1 | 39 | 0 | 0 | 39 | AMR SID | 8 |
| 0 | 0 | 0 | 0 | 0 | NO_DATA | 15 |

In this example, it is assumed that the protocol conversion unit 113 generates AMR mode-set information based on an SDP (Session Description Protocol) by using RFCI information extracted from a received frame, the number of RAB sub-flows in each of the RFCIs, and the length of each of the RAB sub-flows. The RFCI information is information for identifying the combination of sizes (lengths) of the RAB sub-flows, and corresponds to the information at the left-end column in TABLE 1 mentioned above. The SDP is one of call control messages and is specified in, for example, RFC2327, RFC3264 and RFC4566 according to the IETF (Internet Engineering Task Force).

Now, it is assumed that the RFCI information of a received frame is "9", and the sizes of RAB sub-flow 1, RAB sub-flow 2, and RAB sub-flow 3 are "81", "103 and "60", respectively. In this case, "7" is obtained as the mode-set information corresponding to the information from the right-end column in TABLE 1. In the case where the RFCI information is "0" and each of the sizes of RAB sub-flows 1, 2, and 3 is "0", for example, "15" is obtained as the mode-set information from TABLE 1. The protocol conversion unit 113 supplies the obtained mode-set information to the call control signal transmission unit 114.

The call control signal transmission unit 114 sets the mode-set information from the protocol conversion unit 113 in a call control signal to be transmitted to the IMS device 120 (step S6). As a protocol of the call control signal, for example, an SIP (Session Initiation Protocol) specified in RFC3261 of the IETF, the SDP, and the like can be used. TABLE 2 shows an example of the call control signal written by the SDP.

**[TABLE 2]**

| |
|---|
| m=audio 3456 RTP/AVP 0 18 96 |
| a=rtpmap: 96AMR/8000 mode-set=7, 8, 15 |
| a=ptime : 20 |

The call control signal shown in TABLE 2 indicates that AMR is used for a voice codec, the mode-set information is "7", "8" and "15", and the packet transmission cycle is "20"[ms]. The call control signal transmission unit 114 transmits the call control signal, as shown in TABLE 2, addressed to the IMS device 120 to the IMS core network 102 subsequently to transmission of an SIP message (step S7).

According to the embodiment, a call control adapted to the IMS core network 102 can be performed on the frame signal supplied from the circuit switching network 101 to the IMS core network 102. As a result, a multimedia service in the circuit switching network 101 can be provided in a proper state to an IMS.

The embodiment of the present invention is not limited to the above-described mode but can be appropriately changed within the scope of the claims. For example, a voice codec other than the AMR described above can be used. The IMS device 120 may be a device connected not to the IMS core network 102 formed in an IP network but to the IP network itself. In this case, the IMS core network 102 in FIG. 1 can be replaced with an IP network of a fixed network.

The information which is set in the call control signal to the IMS device 120 is not limited to the mode-set information but may be another parameter. As the protocol of the call control signal the SIP INFO method specified in RFC2976 of IETF can also be used in place of SDP or SIP.

The gateway device 110 can receive the U-plane data from the IMS device 120 via the IMS core network 102 and output the U-plane data to the wireless base station controller 100 via the circuit switching network 101.

The determination unit 112 of the above embodiment determines whether the received frame is the initialization request or not. The invention, however, is not limited to this embodiment. For example, the determination unit 112 may determine whether the received frame is a rate control request of the IuUP protocol or not. In this case, when the PDU type of the received frame is "14" and the procedure indicator information indicates "1", the frame is determined as the rate control request. The rate control request refers to a procedure for requesting control on the AMR bit rate in communication from the IMS core network 102 to the circuit switching network 101.

The present invention can be embodied as a computer program corresponding to the operation procedure (FIG 3) of the gateway device 110 or a computer-readable medium in which the program is stored.

### <Second Embodiment>

FIG. 4 shows a system configuration of a second embodiment of the present invention. In a system 20 in FIG. 4, the same reference numerals are assigned to components similar to those of the foregoing embodiment (FIG. 1).

The call control process and the U-plane process in the technical field of the present invention are essentially of different properties. In the second embodiment, the system 20 in which the processes are executed by separate devices will be described. The system 20 has the configuration that the functions of the gateway device 110 of the foregoing embodiment are distributed to a U-plane gateway device 200 and a call controller 210.

FIG. 5 shows a functional configuration of the U-plane gateway device 200 and the call controller 210. In the U-plane gateway device 200, a determination unit 201, a U-plane data communication unit 202, a protocol conversion unit 203, and a U-plane data communication unit 204 play functions similar to the determination unit 112, the U-plane data communication unit 111, the protocol conversion unit 113, and the U-plane data communication unit 115 in FIG 2, respectively. The U-plane data communication unit 202 corresponds to a first communication unit of the gateway device in the system according to the present invention.

A call control signal transmission unit 211 of the call controller 210 has a function similar to that of the call control signal transmission unit 114 (FIG. 2) of the gateway device 110.

In the system 20, the U-plane gateway device 200 and the call controller 210 are connected to each other so that they can communicate each other. In the second embodiment, an MEGACO (Media Gateway Control) specified in RFC3015 ofIETF is used as a protocol for the connection. For the connection using the MEGACO, as shown in FIG 5, the U-plane gateway device 200 is provided with the MEGACO communication unit 205, and the call controller 210 is provided with an MEGACO communication unit 212. The MEGACO communication unit 205 corresponds to a second communication unit of the gateway device in the system of the present invention.

The operation of the second embodiment is basically similar to that of the foregoing embodiment described with reference to FIG. 3. Specifically, when the U-plane data communication unit 202 receives a frame of the IuUP protocol from the circuit switching network 101, the determination unit 201 checks the PDU type and the procedure indicator information of the frame. In the case where the PDU type is "14" and the procedure indicator information is "0" as a result of the check, the protocol conversion unit 203 generates the AMR mode-set information by using RFCI information of the received frame and the like.

The MEGACO communication unit 205 supplies the generated mode-set information together with transmission instruction information and the like on an MEGACO signal to the call controller 210.

In the call controller 210, when the MEGACO communication unit 212 receives the mode-set information from the U-plane gateway device 200, the call control signal transmission unit 211 generates a call control signal based on SDP or SIP by using the mode-set information. The generated call control signal is transmitted to the IMS core network 102 subsequent to the SIP message.

According to the second embodiment, the call control process and the U-plane process are executed by separate devices, so that an optimum device can be assigned to each process. This facilitates securing scalability (the width from small capacity to large capacity) of the system.

The second embodiment can be modified in a similar manner to the first embodiment. Further, the protocol for connecting the U-plane gateway device 200 and the call controller 210 is not limited to the MEGACO but may be any protocol such as SIP as long as it is adapted to the protocol of the call control signal.

This application is based upon and claims the benefit of priority from Japanese patent application No. 2008-006888, filed on January 16, 2008, the disclosure of which is incorporated herein in its entirety by reference.

## Claims

1. A gateway device comprising:
a communication unit communicating a frame signal conforming to an IuUP (Iu User Plane) protocol with a wireless base station controller connected to a circuit switching network;
a determination unit determining whether the frame signal received by the communication unit satisfies a predetermined condition or not;
a conversion unit converting information included in the frame signal to information to be set in a call control signal of an IMS (IP Multimedia Subsystem) when the frame signal satisfies the predetermined condition; and
a call control signal transmission unit transmitting the call control signal including the converted information to a communication device in the IMS.

2. The gateway device according to claim 1, wherein the call control signal transmission unit transmits a signal conforming to SDP (Session Description Protocol) or a signal conforming to SIP (Session Initiation Protocol) as the call control signal.

3. The gateway device according to claim 1 or 2, wherein the determination unit determines that the frame signal satisfies the predetermined condition when the frame signal indicates an initialization request or a rate control request of the IuUP protocol.

4. The gateway device according to any one of claims 1 to 3, wherein the conversion unit determines a bit rate of a voice codec as the information to be set in the call control signal by using at least one of a RFCI (RAB Sub-Flow Combination Indicator), a number of RAB sub-flows and a length of the RAB sub-flow included in a frame signal satisfying the predetermined condition.

5. A system comprising:
a gateway device; and
a call controller connected to the gateway device communicatably,
wherein the gateway device comprises:
a first communication unit communicating a frame signal conforming to an IuUP (Iu User Plane) protocol with a wireless base station controller connected to a circuit switching network;
a determination unit determining whether the frame signal received by the first communication unit satisfies a predetermined condition or not;
a conversion unit converting information included in the frame signal to information to be set in a call control signal of an IMS (IP Multimedia Subsystem) when the frame signal satisfies the predetermined condition; and
a second communication unit transmitting the information converted by the conversion unit to the call controller, and
the call controller comprises
a call control signal transmission unit transmitting the call control signal including the information received from the gateway device to a communication device in the IMS.

6. The system according to claim 5, wherein the second communication unit transmits the information to be transmitted to the call controller by a MEGACO (Media Gateway Control) protocol.

7. A communication method comprising:
receiving a frame signal conforming to an IuUP (Iu User Plane) protocol from a wireless base station controller connected to a circuit switching network;
determining whether the frame signal satisfies a predetermined condition or not;
converting information included in the frame signal to information to be set in a call control signal of an IMS (IP Multimedia Subsystem) when the frame signal satisfies the predetermined condition; and
transmitting the call control signal including the converted information to a communication device in the IMS.

8. The communication method according to claim 7, wherein the call control signal is a signal conforming to SDP (Session Description Protocol) or a signal conforming to SIP (Session Initiation Protocol).

9. The communication method according to claim 7 or 8, wherein the frame signal is determined that it satisfies the predetermined condition when the frame signal indicates an initialization request or a rate control request of the IuUP protocol.

10. The communication method according to any one of claims 7 to 9, wherein in the conversion, a bit rate of a voice codec is determined as information to be set in the call control signal by using at least one of a RFCI (RAB Sub-Flow Combination Indicator), a number of RAB sub-flows and a length of the RAB sub-flow included in a frame signal satisfying the predetermined condition.

11. A computer-readable medium stored therein a program causing the computer to execute steps of:
receiving a frame signal conforming to an IuUP (Iu User Plane) protocol from a wireless base station controller connected to a circuit switching network;
determining whether the frame signal satisfies a predetermined condition or not;
converting information included in the frame signal to information to be set in a call control signal of an IMS (IP Multimedia Subsystem) when the frame signal satisfies the predetermined condition; and
transmitting the call control signal including the converted information to a communication device in the IMS.

## Amended claims

### Amended claims under Art. 19.1 PCT

**1.** Amended) A gateway device comprising:
a communication unit communicating a frame signal conforming to an IuUP (Iu User Plane) protocol with a wireless base station controller connected to a circuit switching network;
a determination unit determining whether the frame signal received by the communication unit signifies an initialization request or a rate control request of the IuUP protocol or not;
a conversion unit converting information included in the frame signal to information to be set in a call control signal of an IMS (IP Multimedia Subsystem) when the determination is affirmative; and
a call control signal transmission unit transmitting the call control signal including the converted information to a communication device in the IMS.
**2.** The gateway device according to claim 1, wherein the call control signal transmission unit transmits a signal conforming to SDP (Session Description Protocol) or a signal conforming to SIP (Session Initiation Protocol) as the call control signal.
**3.** Canceled)
**4.** Amended) The gateway device according to any one of claims 1 to 3, wherein the conversion unit determines a bit rate of a voice codec as the information to be set in the call control signal by using at least one of a RFCI (RAB Sub-Flow Combination Indicator), a number of RAB sub-flows and a length of the RAB sub-flow included in the frame signal.
**5.** A system comprising:
a gateway device; and
a call controller connected to the gateway device communicatably,
wherein the gateway device comprises:
a first communication unit communicating a frame signal conforming to an IuUP (Iu User Plane) protocol with a wireless base station controller connected to a circuit switching network;
a determination unit determining whether the frame signal received by the first communication unit signifies an initialization request or a rate control request of the IuUP protocol or not;
a conversion unit converting information included in the frame signal to information to be set in a call control signal of an IMS (IP Multimedia Subsystem) when the determination is affirmative; and
a second communication unit transmitting the information converted by the conversion unit to the call controller, and
the call controller comprises
a call control signal transmission unit transmitting the call control signal including the information received from the gateway device to a communication device in the IMS.
**6.** The system according to claim 5, wherein the second communication unit transmits the information to be transmitted to the call controller by a MEGACO (Media Gateway Control) protocol.
**7.** Amended) A communication method comprising:
receiving a frame signal conforming to an IuUP (Iu User Plane) protocol from a wireless base station controller connected to a circuit switching network;
determining whether the frame signal signifies an initialization request or a rate control request of the IuUP protocol or not;
converting information included in the frame signal to information to be set in a call control signal of an IMS (IP Multimedia Subsystem) when the determination is affirmative; and
transmitting the call control signal including the converted information to a communication device in the IMS.
**8.** The communication method according to claim 7, wherein the call control signal is a signal conforming to SDP (Session Description Protocol) or a signal conforming to SIP (Session Initiation Protocol).
**9.** Canceled)
**10.** Amended) The communication method according to any one of claims 7 to 9, wherein in the conversion, a bit rate of a voice codec is determined as information to be set in the call control signal by using at least one of a RFCI (RAB Sub-Flow Combination Indicator), a number of RAB sub-flows and a length of the RAB sub-flow included in the frame signal.
**11.** Amended) A computer-readable medium stored therein a program causing the computer to execute steps of:
receiving a frame signal conforming to an IuUP (Iu User Plane) protocol from a wireless base station controller connected to a circuit switching network;
determining whether the frame signal signifies an initialization request or a rate control request of the IuUP protocol or not;
converting information included in the frame signal to information to be set in a call control signal of an IMS (IP Multimedia Subsystem) when the determination is affirmative; and
transmitting the call control signal including the converted information to a communication device in the IMS.
